# EUROPÄISCHE PATENTANMELDUNG

(11) **EP 4 170 216 A1**
(43) Veröffentlichungstag der Anmeldung: **26.04.2023**
(21) Anmeldenummer: 21203867.3
(22) Anmeldetag: 21.10.2021
(51) Int. Cl.: F16L 13/14

(54) **VERBINDUNGSSTÜCK FÜR ROHRLEITUNGEN**

(71) Anmelder: SANHA GmbH & Co. KG, 45219 Essen (DE)
(72) Erfinder: Van den Abbeele, Geert, 54655 Kyllburg (DE); Herberg, Tom, 02964 Malschwitz (DE)
(74) Vertreter: Zenz Patentanwälte Partnerschaft mbB

(57) **Zusammenfassung**

Ein Verbindungsstück aus Metall für Rohrleitungen, wobei das Verbindungsstück wenigstens einen zylindrischen, rohrförmigen Aufnahmeabschnitt (2a, 2b; 12a, 12b; ...; 92a, 92b) aufweist, in den ein Rohrleitungsabschnitt (10, 11) einschiebbar ist. Der Aufnahmeabschnitt (2a, 2b; 12a, 12b; ...; 92a, 92b) ist wenigstens teilweise als verformbarer Pressabschnitt ausgebildet und auf seiner Innenseite ist wenigstens eine erste ringförmige Sicke (3a, 3b; 13a, 13b; ...; 93a, 93b) entlang eines inneren Umfangs des Verbindungsstücks ausgebildet.

In die Sicke (3a, 3b; 13a, 13b; ...; 93a, 93b) ist ein elastisches Dichtmittel (4a, 4b; 14a, 14b; ...; 94a, 94b) eingebracht, welches die Sicke wenigstens teilweise ausfüllt. An der Innenseite des Verbindungsstücks in dem Aufnahmeabschnitt (2a, 2b; 12a, 12b; ...; 92a, 92b) ist wenigstens abschnittsweise Blähgraphitmaterial (6a, 6b; 16a, 16b; ...; 96a, 96b) angeordnet, wobei das Blähgraphit zumindest teilweise in Ausnehmungen in der Innenseite des Verbindungsstücks angeordnet ist.

## Beschreibung

Die Erfindung betrifft ein Verbindungsstück aus Metall für Rohrleitungen. Insbesondere betrifft die Erfindung ein Verbindungsstück für Rohrleitungen mit wenigstens einem zylindrischen, rohrförmigen Aufnahmeabschnitt, in den ein Rohrleitungsabschnitt einschiebbar ist. Der Aufnahmeabschnitt ist wenigstens teilweise als verformbarer Pressabschnitt ausgebildet. In dem Pressabschnitt ist wenigstens eine erste ringförmige Sicke entlang eines inneren Umfangs des Verbindungsstücks ausgebildet und in die erste Sicke ist ein elastisches Dichtmittel eingebracht, welches die Sicke wenigstens teilweise ausfüllt.

Verbindungsstücke der genannten Art werden auch als Pressfitting bezeichnet. Derartige Pressfittings werden aus verschiedenen Metallen hergestellt, beispielsweise aus Edelstahl, anderen Stahlsorten, Kupfer oder Gussmaterialien. Pressfittings ermöglichen die Verbindung von Rohrleitungen in Gestalt gerader Verbindungen oder unter Bereitstellung von Richtungswechseln oder auch Durchmesserwechseln. Auch Abzweige und Trennstellen können durch derartige Pressfittings bereitgestellt werden. Zur Verbindungsherstellung wird in einen rohrförmigen Aufnahmeabschnitt des Verbindungsstücks ein Rohr eingeschoben und anschließend wird im Bereich der Sicke mit dem eingelegten Dichtmittel über ein Presswerkzeug eine plastische Verformung des Verbindungsstückes vorgenommen. Dazu kann das Presswerkzeug neben der Sicke angreifen oder auch die Sicke selbst mitverformen oder aber die Sicke übergreifen und beidseitig der Sicke eine plastische Verformung herbeiführen. Durch die Pressverbindung wird der Ringraum zwischen eingeschobenem Rohr und Verbindungsstück geschlossen und das Dichtmittel dichtet diese gepresste Verbindung dauerhaft ab.

Die Dichtigkeit wird bei diesen Verbindungen erst durch den Pressvorgang herbeigeführt. Die zunächst durch Ineinanderstecken hergestellte Kombination aus Rohr, Dichtmittel und Fitting ist vor dem Verpressen undicht. Diese Undichtigkeit ist erwünscht, sie ermöglicht es dem Installateur, gar nicht oder nicht vollständig verpresste Dichtstellen bei einer durchzuführenden Druckprobe zu detektieren. Entsprechend liegt das Dichtmittel im nicht verpressten Zustand nicht dichtend am Rohr und/oder Fitting an, sondern gibt Raum für eine erwünschte Undichtheit. Beim Verpressen des Fittings wird dieser "leak path" dauerhaft geschlossen und die Verbindung dauerhaft gedichtet.

Verbindungsstücke, die zur Herstellung einer Verbindung der genannten Art geeignet sind, sind beispielsweise aus dem Dokument DE 195 09 586 C1 oder auch dem Dokument DE 102005 043 238 A1 bekannt.

Es ist das Ziel von Pressverbindungen, eine dauerhaft dichtende Verbindung herzustellen. Unter Einfluss extremer Umweltbedingungen, insbesondere im Brandfall oder bei Einwirkung übermäßiger Hitze kann es jedoch zu Undichtigkeiten im Bereich der Pressverbindung kommen.

Aufgabe der Erfindung ist es, dauerhafte Pressverbindungen unter Extrembedingungen durch Bereitstellung eines verbesserten Verbindungsstückes zu ermöglichen.

Diese Aufgabe wird gelöst durch ein Verbindungsstück aus Metall mit den Merkmalen des Patentanspruches 1.

Gemäß der Erfindung weist das Verbindungsstück in dem Aufnahmeabschnitt wenigstens abschnittsweise Bereiche auf, in denen Blähgraphitmaterial angeordnet ist. Das in dem Aufnahmeabschnitt angeordnete Blähgraphit ist dabei zumindest teilweise in Ausnehmungen in der Innenseite des Verbindungsstückes eingebracht.

Der Aufnahmeabschnitt dient gemäß vorstehender Erläuterung dazu, bei Herstellung einer Verbindung ein rohrförmiges Teil aufzunehmen, so dass sich zwischen dem Verbindungsstück, welches einen freien Durchmesser zur Aufnahme der Rohrleitung aufweist und der eingeschobenen Rohrleitung ein Ringspalt bildet. In diesem Verbindungsabschnitt liegt sowohl das Dichtmittel in einer zugeordneten ersten Sicke als auch wenigstens eine Ausnehmung, in welcher Blähgraphit angeordnet ist.

Blähgraphit ist ein Werkstoff, der aufgrund seiner flammhemmenden Wirkung im Brandschutz eingesetzt wird. Die Aufbereitung von Graphit zu Blähgraphit lagert in die Schichtgitterstruktur von Graphit andere Substanzen oder Verbindungen ein, die bei Hitzeeinwirkung die Schichten der Graphit-Gitterstruktur auseinandertreiben, so dass der Werkstoff unter Hitzeeinwirkung expandiert. Die dabei erreichte Expansion ist erheblich und kann hinsichtlich des Endvolumens das bis zu 600fache des Anfangsvolumens erreichen. Durch diese Volumenvergrößerung können Freiräume im Brandfall für Fluide oder den Flammenüberschlag gesperrt werden. Weiterhin wird eine sehr große Oberfläche gebildet, die eine schnelle Oxidation des Kohlenstoffs ermöglicht, so dass der Sauerstoff in diesem Bereich der Verbrennungsluft durch die Oxidation entzogen wird. Auch dies begünstigt die Flammhemmung.

Blähgraphit kann in verschiedensten Materialformen, insbesondere als Pulver oder Flocken sowie auch geformte Körper oder flächige Auflage hergestellt und am Markt erworben werden. Es lässt sich aus diesen Materialien in einfacher Weise in dem erfindungsgemäßen Verbindungsstück und in zugeordneten Ausnehmungen in dem Verbindungsstück ein Materialdepot des Blähgraphites einrichten. Durch die Platzierung in einer Ausnehmung ist das Blähgraphit im Normalbetrieb und bei der üblichen Verbindung des Verbindungsstückes geschützt, so dass ein eingeschobener Rohrleitungsabschnitt das Blähgraphit nicht abtragen kann. Das Verbindungsstück ist ohne besondere Rücksicht auf die Blähgraphiteinlage, ebenso wie die bisherigen Pressfittings zu verwenden, es wird jedoch durch die Platzierung eines Blähgraphitdepots eine deutlich verbesserte Flammschutzwirkung erzielt. Dadurch, dass Blähgraphit in Ausnehmungen im Aufnahmeabschnitt eingebracht wird, wird im Brandfall, also bei Erhitzung dieses Blähgraphits der Ringspalt zwischen eingeschobenem Rohr und dem Verbindungsstück gedichtet. Aufgrund der Expansion des Blähgraphites wird dabei eine Selbstspannung des Systems erreicht, so dass der Ringspalt weitgehend gasdicht gesichert ist. Aufgrund des geringen zu füllenden Volumens im Ringspalt und der vorstehend genannten erheblichen Volumenausdehnung des Blähgraphits kann selbst bei fortgesetzter Hitzeeinwirkung eine Dichtigkeit selbst bei längerer Brandeinwirkung durch Nachexpansion gewährleistet werden.

Wenn im Kontext dieser Erfindung von Ausnehmung die Rede ist, sind damit materialfreie Bereiche auf der Innenseite des Verbindungsstückes bezeichnet, die durch Verformung oder Materialabtrag gebildet werden. Diese materialfreien Bereiche sind also Rücksprünge in der durchgehenden Wand des Verbindungsstückes und insbesondere so ausgebildet, dass ein eingeschobenes Rohr in diese Bereiche nicht mit einer abspanenden oder abscherenden Wirkung vordringen kann, so dass das darin platzierte Blähgraphitdepot vor eingeschobenen Rohren und einer mechanischen Einwirkung geschützt sind.

Die Lage, Gestaltung und Geometrie der Ausnehmungen, in welche das Blähgraphit eingebracht ist, sind abhängig von der Form, in welcher das Blähgraphit in die Ausnehmungen eingebracht wird. Wird beispielsweise ein Blähgraphitkörper in seiner Größe und Kontur auf das Verbindungsstück angepasst und in den Verbindungsabschnitt eingebracht, kann dazu eine entsprechende ringförmige Ausnehmung im Verbindungsstück platziert sein. Alternativ können jedoch auch unterbrochene oder ununterbrochene Bereiche auf der Innenseite des Verbindungsstückes in dem Verbindungsabschnitt angebracht werden, die mit Blähgraphitpulver, ggf. unter Beimengung eines Haftvermittlers gefüllt werden.

Zwar ist das Blähgraphit in jedem Fall zumindest teilweise in dem Aufnahmeabschnitt angeordnet, es ist jedoch nicht unbedingt erforderlich, sämtliches Blähgraphit in diesem Abschnitt zu platzieren. Insbesondere ist es auch nicht erforderlich (wenn auch möglich), dass das Blähgraphit sich in dem Bereich des Aufnahmeabschnittes befindet, welcher als Pressabschnitt dient. Das Blähgraphit kann also sowohl in Aufnahmeabschnittsbereichen platziert sein, die nicht als Pressabschnitt dienen, es kann jedoch auch, zumindest teilweise, in dem Pressabschnitt angeordnet sein und außerdem können Teile des Blähgraphits auch außerhalb des Aufnahmeabschnitts platziert sein.

Es ist damit ein einfach verwendbares Verbindungsstück hergestellt, welches von dem Anwender in derselben Weise zu verarbeiten und zur Herstellung einer Pressverbindung verwendbar ist, wie herkömmliche Verbindungsstücke zur Herstellung von Pressverbindungen. Der erhebliche Mehrnutzen des Flammschutzes wird ohne weiteres Zutun bei der Montage automatisch bereitgestellt, da die Blähgraphitdepots zusammen mit dem Verbindungsstück derart ortsfest in dem Verbindungsstück platziert sind, dass sie zur Dichtung des Ringspaltes bei hergestellter Pressverbindung optimal platziert sind.

Es ist besonders bevorzugt, wenn die Ausnehmungen, die durch das Blähgraphit wenigstens teilweise gefüllt werden, durch dieselbe erste Sicke gebildet sind, in welcher auch das Dichtmittel eingebracht ist.

Gemäß dieser Ausführungsform wird die ohnehin vorhandene Sicke, welche das elastische Dichtmittel zum Dichten der Pressverbindung aufnimmt, auch zur Aufnahme wenigstens eines Teils des Blähgraphites verwendet. Dabei kann das Blähgraphit vor dem Einlegen des Dichtmittels in die Sicke in der Sicke gleichsam als Unterlage platziert werden oder es wird neben dem Dichtmittel in einem oder beide der seitlichen Ausläufer der Sicke platziert. Die Randbereiche einer Sicke, wo das Wandungsmaterial wieder in eine gerade Wandung übergeht, sind üblicherweise mit dem Dichtmittel nicht gefüllt, so dass hier Aufnahmebereiche zur großzügigen Aufnahme des Blähgraphits dienen können. Das Blähgraphit kann dabei in diesen Bereichen aufgestrichen werden oder es wird als Ring oder Folie in diese Bereiche eingelegt.

Es ist dabei grundsätzlich auch möglich, die erste Sicke im seitlichen Bereich, also in axialer Richtung des Verbindungsstückes versetzt zur eingelegten Dichtung teilweise zu erweitern, um einen größeren Aufnahmebereich für das Blähgraphit bereitzustellen.

Es ist dabei besonders vorteilhaft, wenn das Blähgraphit in der ersten Sicke zwischen Dichtmittel und Wandmaterial des Verbindungsstückes angeordnet ist.

In diesem Bereich ist das Blähgraphit durch das Dichtmittel geschützt, solange es nicht zu einer Erhitzung des Verbindungsstückes kommt, die zu einer Expansion des Blähgraphites führen würde. Kommt es tatsächlich zum Brandfall, so wird zunächst durch die expansive Wirkung des Blähgraphites das Dichtmittel längsmöglich als Dichtstoff an die innere Rohrleitung gepresst, wobei sogar noch eine thermische Isolierung zur Außenhaut durch das expandierende Blähgraphit bereitgestellt wird. Auf diese Weise wird das Dichtmittel längsmöglich in seiner Dichtwirkung unterstützt. Ist das Dichtmittel dann durch thermische Zersetzung unwirksam, wird dessen Raum durch das expandierende Blähgraphit eingenommen.

In einer alternativen Gestaltung der Erfindung ist das Blähgraphit in wenigstens einer zweiten Sicke ausgebildet, die in dem Verbindungsstück in axialer Richtung des Aufnahmeabschnitts versetzt ausgebildet ist.

In dieser Ausgestaltung wird für das Blähgraphit im Verbindungsstück also gezielt eine zweite Sicke gebildet, die hinsichtlich ihrer Geometrie und Abmessung durchaus verschieden von der ersten Sicke sein kann. Eine solche Sicke ist durch entsprechende Formgebungswerkzeuge gut herstellbar und bietet einen Aufnahmeraum, in dem sowohl Blähgraphit in Pulver- oder Flockenform, ggf. unter Vermischung mit einem Haftvermittler, als auch Blähgraphit in Gestalt von vorgeformten Körpern, beispielsweise als Ringe eingelegt werden können.

In einer Weiterbildung dieser Gestaltung der Erfindung kann die erste Sicke benachbart zu der zweiten Sicke ausgebildet sein, so dass die Sicken ineinander übergehen und eine Doppelsicke ausgebildet ist, von denen ein Teil der Sicke durch ein Dichtmittel und das andere Teil der Sicke teilweise durch Blähgraphit gefüllt ist.

Insbesondere in der Gestaltung mit einer Sicke als Aufnahme für das Blähgraphit, aber auch in anderen Gestaltungen ist es besonders vorteilhaft, wenn das Blähgraphit wenigstens teilweise als ringförmiger Körper in eine zugeordnete Ausnehmung eingesetzt ist.

Die Platzierung eines derart vorgefertigten Körpers gewährleistet eine radial durchgehende Platzierung des Blähgraphits entlang des gesamten Umfangs im Verbindungsstück und dabei einer äußerst gleichmäßige Verteilung des Blähgraphits.

In einer anderen bevorzugten Gestaltung der Erfindung ist das Blähgraphit als Folie in das Verbindungsstück eingebracht, wobei die Folie in eine zugeordnete Ausnehmung, also beispielsweise einen Bereich der Sicke oder Bereiche mit sonstigen Ausnehmungen platziert ist.

Es ist besonders bevorzugt, wenn die Ausnehmungen, in welchen das Blähgraphit in dem Verbindungsbereich platziert ist durch eine Profilierung und/oder Aufrauen der Innenseite des Verbindungsstückes im Aufnahmeabschnitt gebildet sind.

Das bereits vorstehend genannte Dokument DE 10 2005 043 238 A1 beschreibt ein Verbindungsstück mit aufgerautem Innenbereich, um den Reibwert zwischen Verbindungsstück und eingeschobenem Rohr nach Herstellung der Pressverbindung zu vergrößern. Dies sichert durch Herstellung einer formschlüssigen Verbindung des aufgerauten Bereichs mit dem eingeschobenen Rohr die Verbindung in mechanischer Weise. Die gleichzeitige Nutzung der vorhandenen Aufrauhung oder Profilierung der Innenbereiche stellt sowohl eine mechanische Sicherung als auch den zusätzlichen Nutzen einer Brandschutzsicherung gleichzeitig zur Verfügung. Bei Herstellen der Pressverbindung werden Material des umliegenden Verbindungsstückes und des eingeschobenen Rohres in den aufgerauten oder profilierten Bereichen teilweise miteinander verzahnt. Wenn in den Ausnehmungen der profilierten Bereiche im Verbindungsstück Blähgraphit angeordnet ist, wird dies in dem verzahnten Bereich als Depots zwischen beiden Bauteilen eingeschlossen und entfaltet bei Hitzeeinwirkung seine besonders effektive dichtende Wirkung an dieser Stelle.

In einer bevorzugten Ausgestaltung der Erfindung ist das Blähgraphit wenigstens teilweise als Sprühauftrag oder Streichauftrag an dem Verbindungsstück angeordnet. Insbesondere in Kombination mit der Variante einen Innenprofilierung kann ein Sprühauftrag des Blähgraphits für eine verteilte und sparsame Platzierung des Blähgraphits sorgen, bei der auch kleinste Ausnehmungen mit Blähgraphit aufgefüllt werden können. Es wird damit eine sparsame, flächige und besonders effektive Dichtung über einen größeren axialen Abschnitt des Verbindungsstückes erreicht.

In einer Weiterbildung der Erfindung ist das Blähgraphit nicht nur im Verbindungsbereich aufgebracht, sonders wenigstens teilweise im endseitig an dem Aufnahmeabschnitt angrenzenden Bereich des Verbindungsstückes, so dass bei Einschub eines Rohrleitungsabschnittes das Blähgraphit an eine Endseite des eingeschobenen Rohrleitungsabschnitts angrenzt.

Die Platzierung eines Blähgraphitdepots in dem Bereich, in dem das Rohrende bei hergestellter Pressverbindung zum Liegen kommt, kann die Stirnseite des Ringspaltes zwischen Verbindungsstück und eingeschobenem Rohr im Brandfall dichten. Weiterhin ist es sogar möglich, dass ein Blähgraphitdepot in diesem Bereich angesichts seiner erheblichen Expansion im Brandfall den Rohrquerschnitt insgesamt verringert, also nicht nur den Ringspalt dichtet, was durch das Blähgraphit im Verbindungsbereich bewirkt wird, sondern sogar eine Verringerung des Rohrquerschnitts bewirkt, welcher durch das Verbindungsstück selbst, also jenseits des stirnseitigen Endes eines eingeschobenen Rohres gebildet ist.

Im Rahmen einer Abwandlung der Erfindung ist das Dichtmittel mit dem Blähgraphit zu einem integralen Bauteil verbunden. Das Dichtmittel kann z.B. in der üblichen Form als O-Ring ausgebildet sein, wobei jedoch ein innenliegender, ringförmiger Kern aus Blähgraphit durch das elastische Material vollständig umgeben ist. Bei Hitzeeinwirkung und Zersetzung des elastischen Mantelmaterials des Dichtmittels expandiert der innenliegende Kern des Blähgraphits und nimmt den Raum des zerstörten Dichtmittel ein. Der Kern aus Blähgraphit muss dabei nicht durchgehend gebildet sein, sondern kann auch aus ummantelten Blähgraphitdepots bestehen, die in dem Dichtmittel aufgenommen sind.

In einer Abwandlung kann auch Blähgraphit auf der Oberfläche des Dichtmittel zur Bildung eines integralen Bauteils angeordnet sein, so dass das Dichtmittel wenigstens teilweise von Blähgraphit ummantelt oder damit beschichtet ist. Die integrale Kombination von Dichtmittel und Blähgraphit ermöglicht eine besonders einfache Montage und Anordnung, da jederzeit für eine korrekte Platzierung des Blähgraphits gesorgt ist.

Eine weitere Abwandlung der Erfindung betrifft ein Verbindungssystem, wobei jedoch das Blähgraphit nicht im Fitting angeordnet ist, sondern am Außenumfang des Rohrleitungsabschnitts, welcher in das Fitting eingeschoben wird. Entsprechend wird dann ein Verbindungssystem aus Metall für Rohrleitungen bereitgestellt, bei dem ein Verbindungsstück wenigstens einen zylindrischen, rohrförmigen Aufnahmeabschnitt aufweist, wobei der Aufnahmeabschnitt wenigstens teilweise als verformbarer Pressabschnitt ausgebildet ist. Ein Rohrleitungsabschnitt des Verbindungssystems ist in den rohrförmigen Aufnahmeabschnitt einschiebbar. In dem Aufnahmeabschnitt ist auf der Innenseite des Verbindungsstücks wenigstens eine erste ringförmige Sicke entlang eines inneren Umfangs des Verbindungsstücks ausgebildet, in die ein elastisches Dichtmittel eingebracht ist, welches die Sicke wenigstens teilweise ausfüllt. In dieser Abwandlung der Erfindung ist an der Außenseite des Rohrleitungsabschnitts in dem Bereich, welcher in den Aufnahmeabschnitt einschiebbar/eingeschoben ist, wenigstens abschnittsweise Blähgraphitmaterial angeordnet, wobei das Blähgraphit zumindest teilweise in Ausnehmungen in der Außenseite des Rohrleitungsabschnitts angeordnet ist.

Die Erfindung wird nun unter Bezug auf die beiliegende Zeichnung näher erläutert:
Figuren 1a, 1b und 1c zeigen eine erste Ausführungsform in einer schematischen, teiltransparenten Darstellung, einer Schnittansicht und einer Detailvergrößerung der Schnittansicht;
Figuren 2a, 2b und 2c zeigen eine zweite Ausführungsform in einer schematischen, teiltransparenten Darstellung, einer Schnittansicht und einer Detailvergrößerung der Schnittansicht;
Figuren 3a, 3b und 3c zeigen eine dritte Ausführungsform in einer schematischen, teiltransparenten Darstellung, einer Schnittansicht und einer Detailvergrößerung der Schnittansicht;
Figuren 4a, 4b und 4c zeigen eine vierte Ausführungsform in einer schematischen, teiltransparenten Darstellung, einer Schnittansicht und einer Detailvergrößerung der Schnittansicht;
Figuren 5a, 5b und 5c zeigen eine fünfte Ausführungsform in einer schematischen, teiltransparenten Darstellung, einer Schnittansicht und einer Detailvergrößerung der Schnittansicht;
Figuren 6a, 6b und 6c zeigen eine sechse Ausführungsform in einer schematischen, teiltransparenten Darstellung, einer Schnittansicht und einer Detailvergrößerung der Schnittansicht;
Figuren 7a, 7b und 7c zeigen eine siebte Ausführungsform in einer schematischen, teiltransparenten Darstellung, einer Schnittansicht und einer Detailvergrößerung der Schnittansicht;
Figuren 8a, 8b und 8c zeigen eine achte Ausführungsform in einer schematischen, teiltransparenten Darstellung, einer Schnittansicht und einer Detailvergrößerung der Schnittansicht;
Figuren 9a, 9b und 9c zeigen eine neunte Ausführungsform in einer schematischen, teiltransparenten Darstellung, einer Schnittansicht und einer Detailvergrößerung der Schnittansicht;
Figuren 10a, 10b und 10c zeigen eine zehnte Ausführungsform in einer schematischen, teiltransparenten Darstellung, einer Schnittansicht und einer Detailvergrößerung der Schnittansicht.

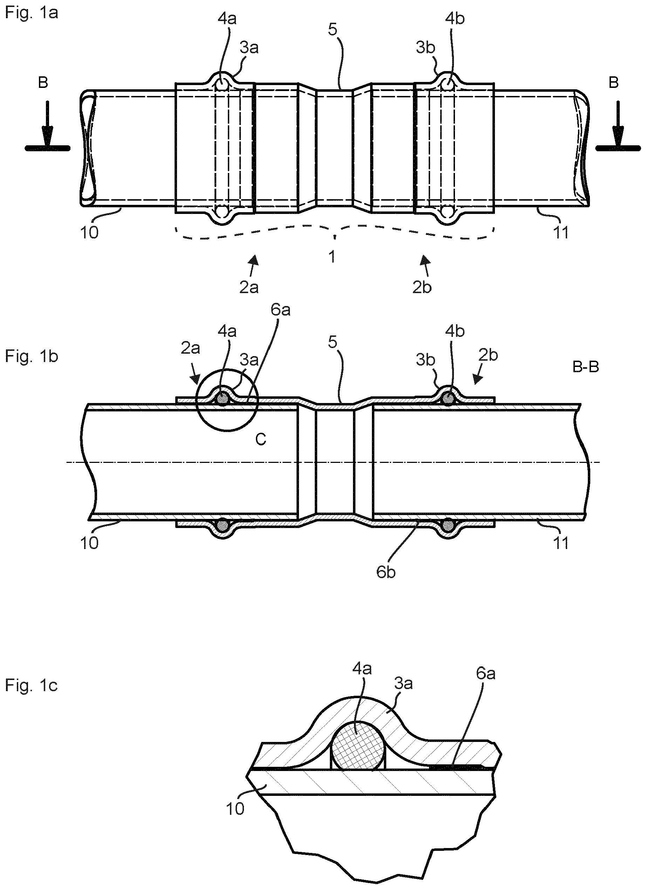

In den Figuren 1a, 1b und 1c ist eine erste Ausführungsform der Erfindung gezeigt. Ein erfindungsgemäßes Verbindungsstück 1 weist zwei voneinander abgewandte zylindrische Abschnitte 2a, 2b auf. Diese sind an den einander zugewandten Enden durch einen eingeschnürten Bereich 5 verbunden. In jedem der Aufnahmeabschnitte 2a, 2b ist jeweils eine Sicke 3a, 3b ausgebildet. In diese Sicken 3a, 3b ist wiederum jeweils ein elastisches Dichtmittel 4a, 4b eingelegt. Die Darstellung zeigt zwei Rohrleitungsabschnitte 10 und 11, die jeweils in die Aufnahmeabschnitte 2a und 2b des Verbindungsstücks 1 eingeschoben sind. Die Rohrleitungsabschnitte 10 und 11 sind dabei soweit in die jeweiligen Aufnahmeabschnitte 2a und 2b eingeschoben, bis sie im Bereich der Einschnürung 5 aufgrund des verengten Durchmessers an entsprechende Anschläge gelangen und dort anliegen.

Die Dichtmittel 4a und 4b liegen in diesem Zustand an den eingeschobenen Rohrleitungsabschnitten 10 und 11 entlang deren Umfang an und dichten den Ringraum, wobei eine Pressverbindung zwischen dem Verbindungsstück 1 und den Rohrleitungsabschnitten 10 und 11 durch plastisches Verformen der Aufnahmeabschnitte 2a und 2b erfolgt ist. Die Abschnitte 2a und 2b klemmen also die eingeführten Rohrleitungsabschnitte 10 und 11 und verbinden diese zu einer durchgehenden Fluidverbindung.

Die Figur 1b zeigt einen Schnitt durch die Anordnung aus Figur 1a entlang der markierten Schnittebene. Die Figur 1c zeigt eine Detailvergrößerung, eines in Figur 1b durch einen Kreis kenntlich gemachten Bereichs.

In diesem ersten Ausführungsbeispiel sind Folienlagen 6a, 6b aus Blähgraphit jeweils in einem Randbereich der Sicken 3a und 3b platziert. Die Folienlagen 6a, 6b sind als dünne Materialschicht in einem Ausläufer der Sickenverformung als Ausnehmung platziert. In diesem Ausführungsbeispiel sind die Folienlagen 6a, 6b auf der zur Verbindungsseite 5 weisenden Seite der jeweiligen Sicken 3a, 3b angeordnet. Je nach Platzierung der Folienlagen 6a und 6b ist keine über die übliche Geometrie der Sicke hinausgehende Verformung des Materials im Bereich der Sicke erforderlich, sofern die Folienlage nah genug an die zentrale Sickenausformung herangerückt ist, da dann eine Ausnehmung durch die seitlichen Ausläufer der Sicke ohnehin gebildet ist. Alternativ kann, wie in Figur 1c erkennbar, eine Ausnehmung durch einen geringfügigen Materialabtrag im Randbereich der Sicke erfolgen, in welchen die Folienlagen 6a bzw. 6b eingelegt sind.

Die weiteren Ausführungsbeispiele werden ohne Wiederholung der Beschreibung zur Herstellung einer Pressverbindung mit den eingeschobenen Rohrleitungen 10 und 11 beschrieben, da es darauf bei der Erfindung nicht ankommt. Es gilt das vorstehende für diese Ausführungsbeispiele sinngemäß.

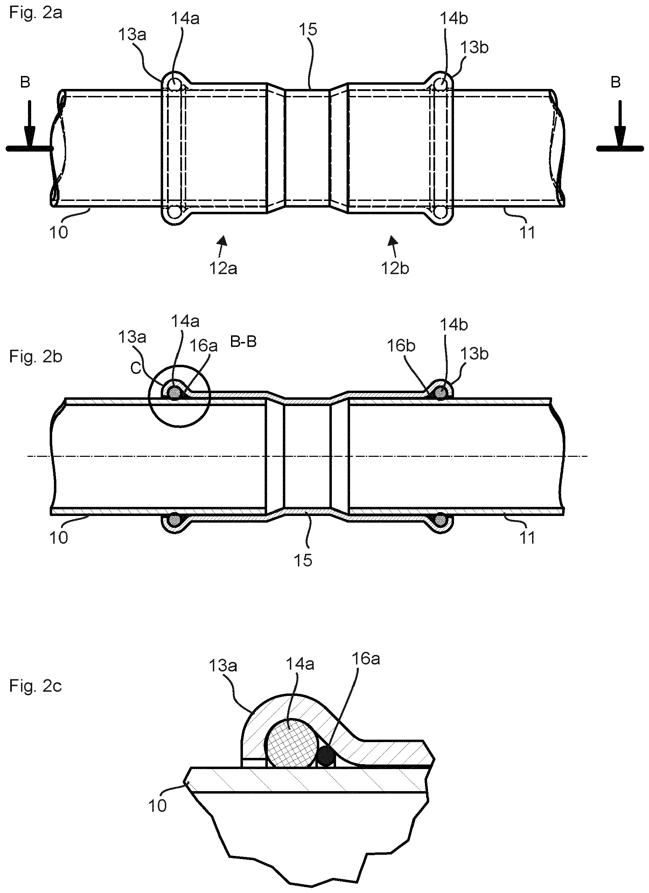

In den Figuren 2a, 2b und 2c ist eine zweite Ausführungsform gezeigt, wobei das Blähgraphit als ringförmiger Körper 16a in eine endseitige Sicke 13a an dem Verbindungsstück eingelegt ist, welche auch das Dichtmittel 14a aufnimmt. Dichtmittel 14a und Blähgraphit 16a sind unmittelbar benachbart in derselben endseitigen Sicke angeordnet und bilden auf diese Weise einen Dichtverbund, wobei das ringförmige Material 16a im Brandfall expandiert und den Raum der Sicke 13a vollständig ausfüllt, wenn das Dichtmaterial 14a thermisch zersetzt wird. Auf der abgewandten Seite ist eine entsprechende Sicke 13b mit Dichtmittel 14b und Blähgraphit 16b gebildet.

In diesem Beispiel ist das Blähgraphit in Gestalt des ringförmigen Materials 16a auf derjenigen Seite des Dichtmaterials 14a angeordnet, welche der Einschubseite abgewandt ist, eine Anordnung auf der Seite des Dichtmittels 14a, welche der Einschubseite zugewandt ist, ist jedoch ebenfalls möglich.

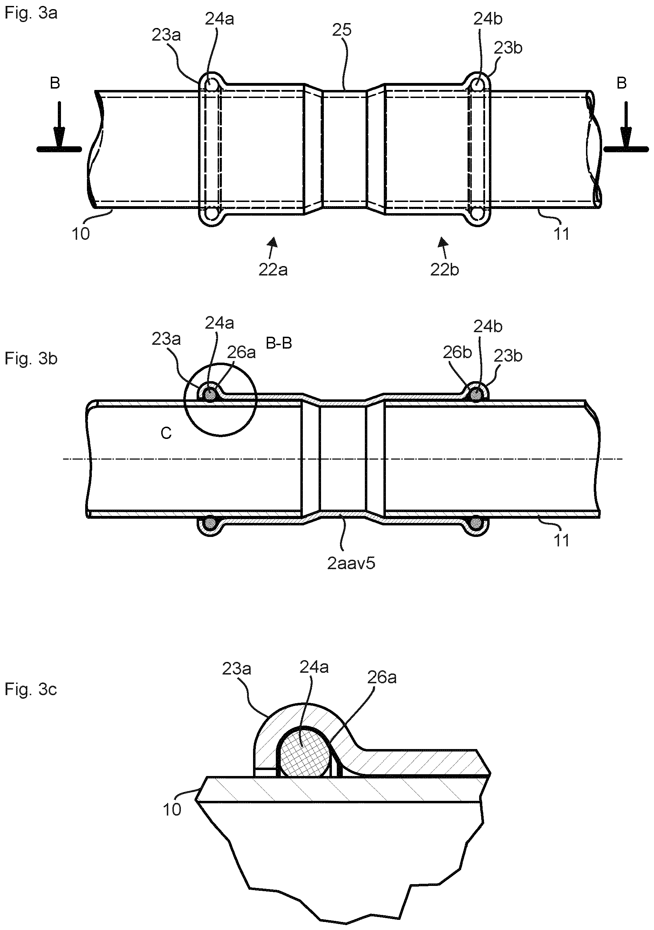

In den Figuren 3a, 3b, 3c ist eine dritte Ausführungsform der Erfindung gezeigt. In dieser Darstellung ist das Blähgraphit als Folie 26a zwischen dem Material der Sicke 23a und dem Dichtmaterial 24a eingelegt und wird durch das Dichtmaterial 24a in seiner Lage fixiert. In dieser Gestaltung kann eine thermische Entkopplung zwischen Dichtmaterial 24a und beispielsweise einer Hitzequelle in der Umgebung erfolgen, wenn das Blähgraphit in dem Folienmaterial 26a expandiert. Auf der abgewandten Seite ist eine entsprechende Sicke 23b mit Dichtmittel 24b und Blähgraphit 26b gebildet.

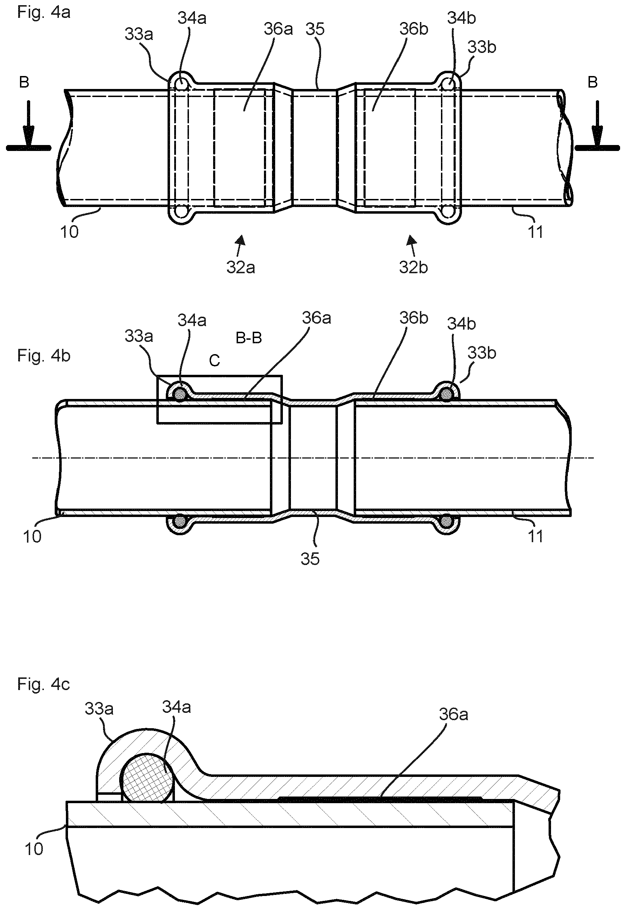

In den Figuren 4a, 4b und 4c ist wiederum ein Verbindungsstück mit zwei Endseiten dargestellt, wobei in diesem Beispiel jedoch das Blähgraphit als Folienmaterial 36a, 36b in einer zugehörigen Ausnehmung, die in diesem Beispiel als Ringnut ausgebildet ist, beabstandet zu den Sicken 33a, 33b eingelegt ist. Die nutförmigen Ausnehmungen für das Blähgraphitmaterial sind durch Fräsen oder ein entsprechendes Verformungswerkzeug ausgebildet. Es ist in Figur 4c ersichtlich, dass die Ausnehmung und die Einbringung der Folie 36a in die Ausnehmung das Blähgraphit vor einem Abschaben oder Abscheren durch das eingeschobene Rohrstück 10 schützt. Die Dichtmittel 34a, 34b in den Sicken 33a, 33b dichten in üblicher Weise den Ringraum bei normalen Betriebsbedingungen.

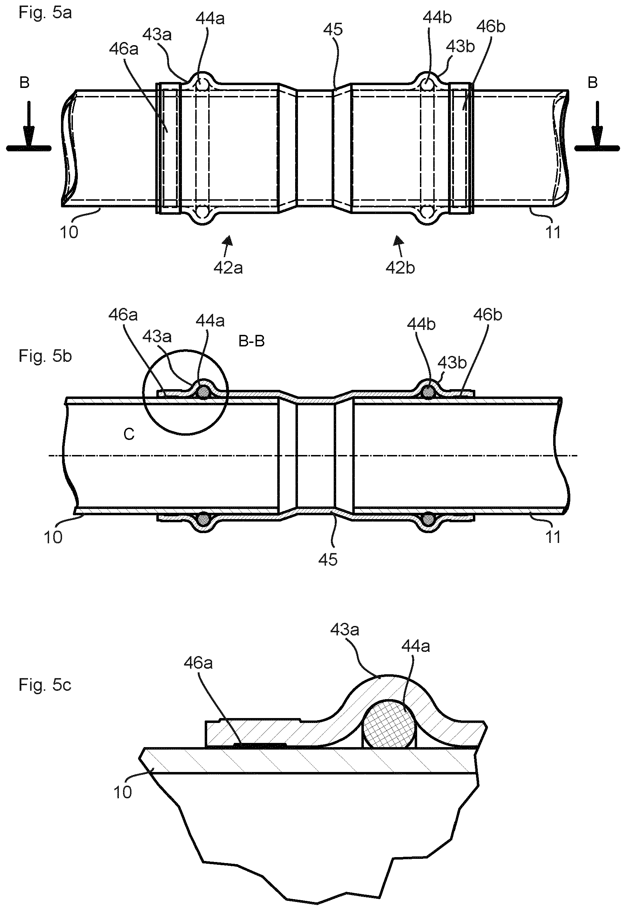

Ein fünftes Ausführungsbeispiel ist in den Figuren 5a, 5b und 5c gezeigt. Dort ist das Blähgraphit als Folienmaterial 46a, 46b in einer der Einschubseite der jeweiligen Anschlüsse zugewandten Seite der Dichtmittel 44a, 44b platziert. Es handelt sich entsprechend um eine Abwandlung des vierten Ausführungsbeispiels hinsichtlich der Abfolge von Dichtmitteln 44a, 44b und Blähgraphit 46a, 46b.

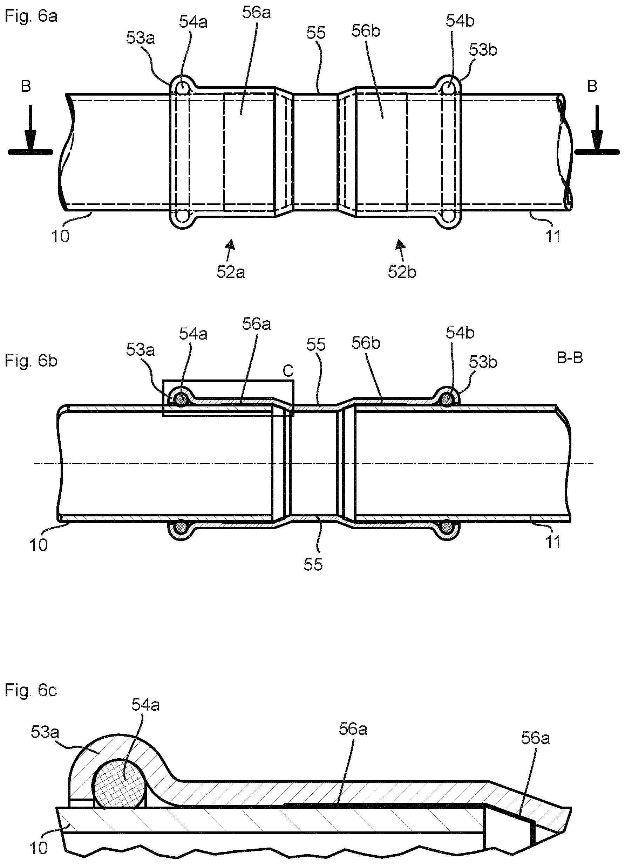

Die Figuren 6a, 6b und 6c zeigen eine sechste Ausführungsform der Erfindung, wobei sich hier Folien 56a, 56b aus Blähgraphit über zugeordnete Ausnehmungen im Einschubbereich bis in den Mittelbereich 55 erstrecken. Das Blähgraphit 56a, 56b ist also sowohl im Einschubbereich und dort in einer Ausnehmung als auch in dem Bereich angeordnet, in den die eingeschobenen Rohre 10, 11 nicht hineinragen. Auf diese Weise ist durch eine Expansion des Blähgraphits möglich, sowohl den Ringspalt zwischen dem Verbindungsstück und den eingeschobenen Rohrleitungsabschnitten 10, 11 zu dichten als auch den Rohrquerschnitt zur Fluidströmung an sich zu verengen oder sogar ganz zu verschließen, je nach Foliendicke und Expansionsvermögen des Blähgraphits.

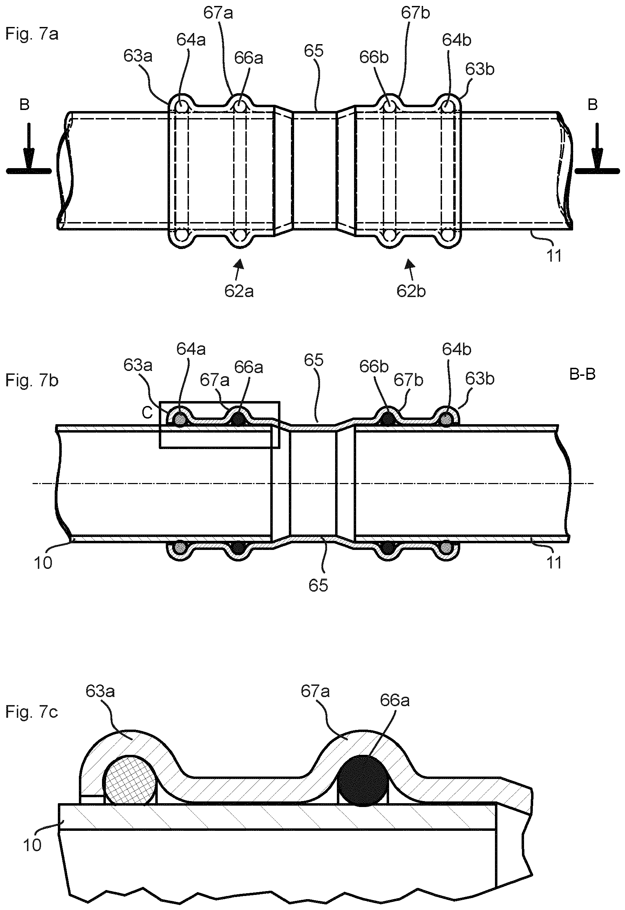

In den Figuren 7a, 7b und 7c ist ein siebtes Ausführungsbeispiel gezeigt. In diesem Ausführungsbeispiel sind je Seite zwei Sicken 63a, 67a bzw. 63b, 67b ausgebildet, wovon jeweils eine das Dichtmittel 64a, 64b aufnimmt und eine weitere einen Ring aus Blähgraphit 66a, 66b. In einer solchen Gestaltung kann eine größere Menge Blähgraphit durch die Sickenausbildung aufgenommen werden, was insbesondere bei besonderen Anforderungen an eine Dauerhaftigkeit des Flammschutzes relevant sein kann.

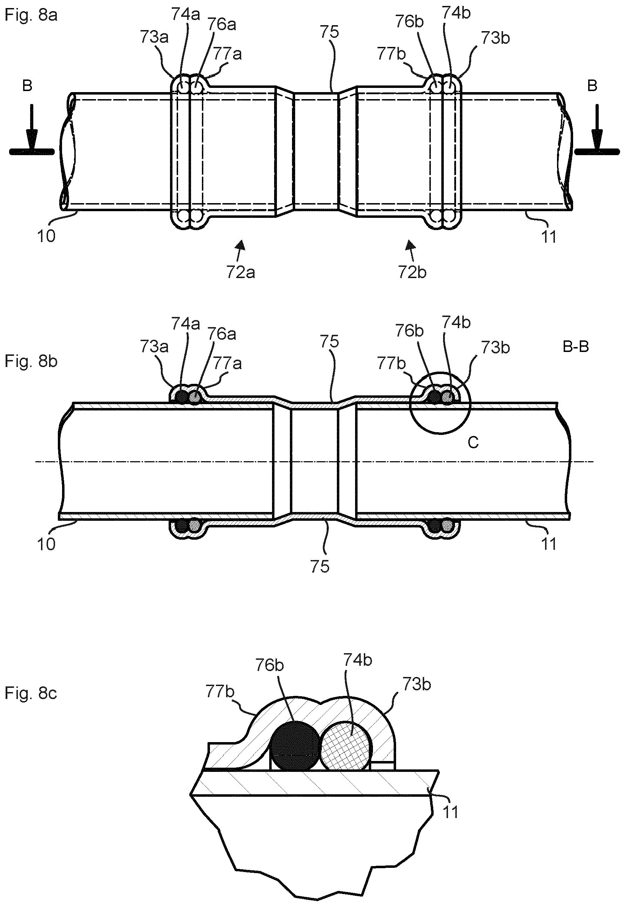

Die Figuren 8a, 8b und 8c zeigen eine achte Ausführungsform der Erfindung, bei der Doppelsicken durch unmittelbare Nebeneinanderanordnung von zwei Sicken 77b, 73b bzw, 77a, 73a gebildet sind. Die Doppelsicken nehmen einerseits die Dichtmittel in Gestalt jeweils eines Dichtrings 74a, 74b sowie jeweils einen Ring 76a, 76b aus einem Blähgraphitmaterial auf.

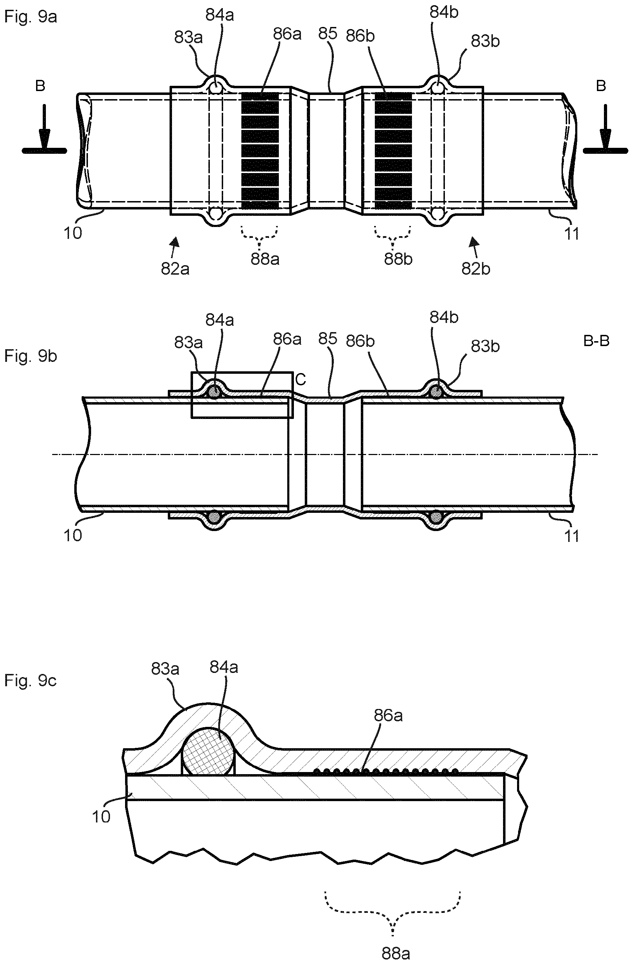

Die Figuren 9a, 9b und 9c zeigen eine neunte Ausführungsform der Erfindung, wobei in dieser Darstellung die Innenseite des Verbindungsstückes im Verbindungsbereich in Abschnitten 88a, 88b aufgeraut oder konturiert ist. Eine solche Aufrauhung oder Konturierung kann beispielsweise durch Materialabtrag oder eine Gewindeschneidung erfolgen. Die Ausnehmungen in den Abschnitten 88a, 88b sind mit Blähgraphit 86a, 86b gefüllt, wobei in Umfangsrichtung auch Unterbrechungen und Bereiche ohne Blähgraphit vorhanden sein können, wie Figur 9a zeigt. Im Fall von großer Hitzeeinwirkung dehnt sich das Blähgraphit 86a, 86b so erheblich aus, dass auch die belegungsfreien Bereiche durch das expandierende Blähgraphit belegt werden und Flammschutz gewährleistet ist. In diesem Beispiel sind die Sicken 83a, 83b und deren zugeordnete Dichtmittel 84a, 84b in üblicher Weise ausgebildet.

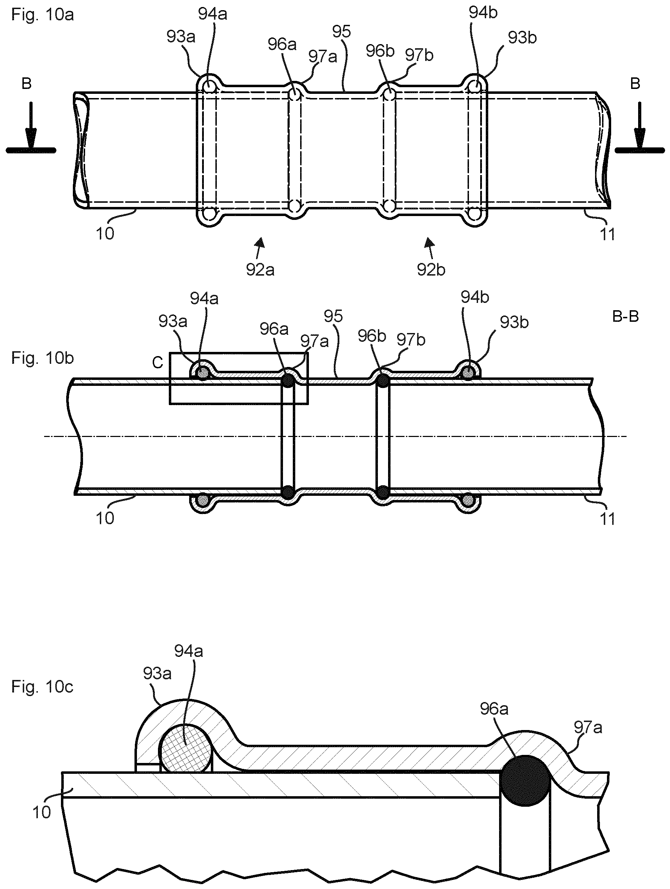

Die Figuren 10a, 10b und 10c zeigen eine zehnte Ausführungsform der Erfindung. Bei dieser Ausführungsform sind am Ende der Aufnahmeabschnitte Sicken 97a, 97b im Bereich des verjüngten Querschnitts 95 angeordnet, wobei in diese Sicken 97a, 97b jeweils ein Ring 96a, 96b aus Blähgraphit eingelegt ist. Auf diese Weise ist das Blähgraphit im Endbereich des Aufnahmeabschnitts angeordnet und wirkt in diesem Anschlagbereich für den eingeschobenen Rohrleitungsabschnitt derart, dass es bei Erhitzung sowohl den Ringspalt zwischen Verbindungsstück und eingeschobenem Rohrleitungsabschnitt verschließt als auch den Querschnitt des Fluiddurchlasses insgesamt verengt oder ganz verschließt. In diesem Beispiel sind die Sicken 93a, 93b und deren zugeordnete Dichtmittel 94a, 94b in üblicher Weise ausgebildet.

Es wurde eine Anzahl von Ausführungsbeispielen gezeigt, die ein Verbindungsstück darstellen, in welches Rohrleitungsabschnitte einführbar sind. Die konkrete Gestaltung des Verbindungsstückes ist hier lediglich beispielhaft gezeigt, das Verbindungsstück kann auch gewinkelt, mit veränderlichen Durchmessern oder in sonstiger Weise ausgebildet sein, wobei es im Rahmen der Erfindung ausschließlich darauf ankommt, wie im Verbindungsbereich Blähgraphit in Ausnehmungen des Verbindungsstückes eingebracht ist.

## Patentansprüche

1. Verbindungsstück aus Metall für Rohrleitungen, wobei das Verbindungsstück wenigstens einen zylindrischen, rohrförmigen Aufnahmeabschnitt (2a, 2b; 12a, 12b; ...; 92a, 92b) aufweist, in den ein Rohrleitungsabschnitt (10, 11) einschiebbar ist,
wobei der Aufnahmeabschnitt (2a, 2b; 12a, 12b; ...; 92a, 92b) wenigstens teilweise als verformbarer Pressabschnitt ausgebildet ist,
wobei in dem Aufnahmeabschnitt auf der Innenseite des Verbindungsstücks wenigstens eine erste ringförmige Sicke (3a, 3b; 13a, 13b; ...; 93a, 93b) entlang eines inneren Umfangs des Verbindungsstücks ausgebildet ist,
wobei in die erste Sicke (3a, 3b; 13a, 13b; ...; 93a, 93b) ein elastisches Dichtmittel (4a, 4b; 14a, 14b; ...; 94a, 94b) eingebracht ist, welches die Sicke wenigstens teilweise ausfüllt,
**dadurch gekennzeichnet,**
**dass** an der Innenseite des Verbindungsstücks in dem Aufnahmeabschnitt (2a, 2b; 12a, 12b; ...; 92a, 92b) wenigstens abschnittsweise Blähgraphitmaterial (6a, 6b; 16a, 16b; ...; 96a, 96b) angeordnet ist, wobei das Blähgraphit zumindest teilweise in Ausnehmungen in der Innenseite des Verbindungsstücks angeordnet ist.

2. Verbindungsstück nach Anspruch 1, wobei das Blähgraphit (16a, 16b; 26a, 26b) wenigstens teilweise in Ausnehmungen angeordnet ist, welche durch die erste Sicke (13a, 13b; 23a, 23b) gebildet sind, in welche auch das Dichtmittel (14a, 14b; 24a, 24b) eingebracht ist.

3. Verbindungsstück nach Anspruch 2, wobei das Blähgraphit (26a) in der ersten Sicke (23a, 23b) zwischen Dichtmittel (24a, 24b) und Wandmaterial des Verbindungsstückes angeordnet ist.

4. Verbindungsstück nach Anspruch 1, wobei das Blähgraphit (66a, 66b, 76a, 76b) wenigstens teilweise in Ausnehmungen angeordnet ist, welche durch eine zweite Sicke (67a, 67b, 77a, 77b) gebildet sind, welche in dem Verbindungsstück in axialer Richtung des Aufnahmeabschnitts versetzt ausgebildet ist.

5. Verbindungsstück nach Anspruch 4, wobei die erste und die zweite Sicke (73a, 77a, 73b, 77b) als benachbarte, ineinander übergehende Sicken zur Bildung einer Doppelsicke ausgebildet sind.

6. Verbindungsstück nach einem der vorangehenden Ansprüche, wobei das Blähgraphit wenigstens teilweise als ringförmiger Körper in eine zugeordnete Ausnehmung eingesetzt ist.

7. Verbindungsstück nach einem der vorangehenden Ansprüche, wobei das Blähgraphit wenigstens teilweise als Folie in eine zugeordnete Ausnehmung eingesetzt ist.

8. Verbindungsstück nach einem der vorangehenden Ansprüche, wobei das Blähgraphit wenigstens teilweise in Ausnehmungen angeordnet ist, welche durch eine Profilierung und/oder Aufrauhung der Innenseite des Verbindungsstückes im Aufnahmeabschnitt gebildet sind.

9. Verbindungsstück nach einem der vorangehenden Ansprüche, wobei das Blähgraphit wenigstens teilweise als Sprühauftrag oder Streichauftrag an dem Verbindungsstück angeordnet ist.

10. Verbindungsstück nach einem der vorangehenden Ansprüche, wobei das Blähgraphit wenigstens teilweise im endseitig an den Aufnahmeabschnitt angrenzenden Bereich des Verbindungsstückes angeordnet ist, so dass bei Einschub eines Rohrleitungsabschnitt das Blähgraphit an eine Endseite des eingeschobenen Rohrleitungsabschnitts angrenzt.

11. Verbindungssystem aus Metall für Rohrleitungen, mit einem Verbindungsstück, welches wenigstens einen zylindrischen, rohrförmigen Aufnahmeabschnitt aufweist,
mit einem Rohrleitungsabschnitt, der in den rohrförmigen Aufnahmeabschnitt einschiebbar ist,
wobei der Aufnahmeabschnitt wenigstens teilweise als verformbarer Pressabschnitt ausgebildet ist,
wobei in dem Aufnahmeabschnitt auf der Innenseite des Verbindungsstücks wenigstens eine erste ringförmige Sicke entlang eines inneren Umfangs des Verbindungsstücks ausgebildet ist,
wobei in die erste Sicke ein elastisches Dichtmittel eingebracht ist, welches die Sicke wenigstens teilweise ausfüllt,
**dadurch gekennzeichnet,**
**dass** an der Außenseite des Rohrleitungsabschnitts in dem Bereich, welcher in den Aufnahmeabschnitt einschiebbar ist, wenigstens abschnittsweise Blähgraphitmaterial angeordnet ist, wobei das Blähgraphit zumindest teilweise in Ausnehmungen in der Außenseite des Rohrleitungsabschnitts angeordnet ist.
